# EUROPÄISCHE PATENTSCHRIFT

(11) **EP 3 949 728 B1**
(45) Veröffentlichungstag und Bekanntmachung des Hinweises auf die Patenterteilung: **04.12.2024**
(21) Anmeldenummer: 21189590.9
(22) Anmeldetag: 04.08.2021
(51) Int. Cl.: A01J 25/00, A01J 25/11, A01J 25/12

(54) **VORRICHTUNG UND VERFAHREN ZUM BEFÜLLEN EINES EIN ODER MEHRERE PORTIONIER-ROHRE UMFASSENDEN FORMATSATZES MIT EINEM KÄSEBRUCH/MOLKE-GEMISCH**
DEVICE AND METHOD FOR FILLING A SET COMPRISING ONE OR MORE PORTIONING PIPES WITH A CHEESE CURD/WHEY MIXTURE
DISPOSITIF ET PROCÉDÉ DE REMPLISSAGE D'AU MOINS UNE PIÈCE COMPRENANT UN TUBE DE FORMATION DE PORTIONS COMPORTANT UN MÉLANGE PETIT-LAIT/LAIT CAILLÉ

(30) Priorität: 07.08.2020 DE 102020120905
(43) Veröffentlichungstag der Anmeldung: 09.02.2022
(73) Patentinhaber: ALPMA Alpenland Maschinenbau GmbH, 83543 Rott am Inn (DE)
(72) Erfinder: FRANZ, Günter, 84544 Aschau am Inn (DE); HOHENADLER, Tobias, 83553 Frauenneuharting (DE)
(74) Vertreter: Manitz Finsterwald Patent- und Rechtsanwaltspartnerschaft mbB

(56) Entgegenhaltungen:
- WO-A1-2016/005306
- CH-A- 434 855
- DE-A1- 10 001 656
- DE-T2- 69 607 297
- FR-A1- 2 202 642

## Beschreibung

Die vorliegende Erfindung betrifft das Gebiet der Käseherstellung und insbesondere eine Vorrichtung gemäß dem Oberbegriff des Anspruchs 1 und ein Verfahren zum Befüllen eines ein oder mehrere Portionier-Rohre umfassenden Formatsatzes mit einem Käsebruch/Molke-Gemisch. Eine gattungsgemäße Vorrichtung geht der Art nach im Wesentlichen aus der DE 696 07 297 T2 hervor.

Bei der Herstellung von Käse aus einem Käsebruch/Molke-Gemisch kann einer Käsebereitungsvorrichtung eine Mischung aus festen Bestandteilen - dem Käsebruch - und flüssigen Bestandteilen - der Molke - zugeführt werden, weshalb solche Verfahren auch unter den Begriff "Abfüllen unter Molke" bekannt sind.

Die Käsebereitungsvorrichtung kann hierzu ein oder mehrere gerade Portionier-Rohre umfassen, die in einem vorbestimmten Raster vertikal parallel zueinander angeordnet sind, wobei das obere Ende des jeweiligen Portionier-Rohrs offen ist und somit einen Einlass bildet, über den das jeweilige Portionier-Rohr mit Käsebruch und Molke beschickt werden kann. Dabei können die Molke und der Käsebruch zunächst sowohl getrennt als auch als Gemisch vorliegen und dem Einlass zugeführt werden.

Das Portionier-Rohr dient dazu, den Käsebruch durch Pressung, beispielsweise durch Gewichtskraft, zu einem Rohkäse zu verdichten. Hierbei verhindert bzw. vermeidet die Molke, dass sich Lufteinschlüsse im Käsebruch bilden können, der im Portionier-Rohr eine Käsebruch-Säule ausbildet, wodurch sich ein geschlossener Rohkäse mit einer minimalen Anzahl von Lufteinschlüssen herstellen lässt. Dementsprechend dienen solche Verfahren der Herstellung fester Schnittkäse wie beispielsweise Gouda oder ähnlicher Käsesorten. Je geringer dabei der Molkeanteil des Käsebruch/Molke-Gemischs ist, umso mehr Bruchlöcher bilden sich in dem Käse aus. Dementsprechend ist hier im Kontext unter dem Begriff "Käsebruch/Molke-Gemisch" eine Mischung aus Käsebruch und Molke zu verstehen, wobei der Molkeanteil jedoch auch gegen Null gehen oder Null betragen kann.

Das Verdichten des Käsebruchs kann wie bereits erwähnt entweder ausschließlich durch das Eigengewicht der Käsebruch-Säule im Portionier-Rohr erfolgen oder durch zusätzliche Maßnahmen unterstützt werden, die zu einer Pressung des Käsebruchs in dem jeweiligen Portionier-Rohr führen. Damit überschüssige Molke aus den Portionier-Rohren abfließen kann, können die Portionier-Rohre perforierte Bereiche aufweisen, durch die die Molke aus den Portionier-Rohren austreten kann.

Um das auf diese Art und Weise verdichtete Käsebruch/Molke-Gemisch am unteren Ende der Portionier-Rohre dosiert abgeben und in unterhalb der Portionier-Rohre befindliche Käseformen abfüllen zu können, können die Portionier-Rohre an ihren jeweiligen unteren Enden jeweils eine Dosiereinrichtung aufweisen, die jeweils eine Portionier-Kammer definieren, deren Volumen einer zur Herstellung einer Käseportion erforderlichen Menge des Käsebruch/Molke-Gemischs entspricht.

Um die einzelnen Portionier-Rohre eines solchen Formatsatzes effizient mit einem Käsebruch/Molke-Gemisch beschicken zu können, können die einzelnen Portionier-Rohre an ihren jeweiligen oberen Enden durch eine horizontal ausgerichtete Lochplatte miteinander verbunden, wobei der Einlass eines jeden Portionier-Rohrs mit einer jeweiligen Öffnung bzw. einem jeweiligen Loch der Lochplatte ausgerichtet ist. Die Lochplatte bildet dabei den Boden bzw. die Bodenplatte eines nach oben hin offenen Behälters, der umfangsseitig durch eine umlaufende Wand begrenzt wird. Alternativ hierzu kann der Behälter nach oben hin auch geschlossen ausgebildet sein, um so für eine höhere mikrobiologische Sicherheit zu sorgen. In diesen so gebildeten Behälter kann somit von oben das Käsebruch/Molke-Gemisch eingefüllt werden, so dass sich dieses in dem Behälter verteilt und sich letztendlich sukzessive in den Portionier-Rohren absetzt, die sich ausgehend von den Löchern bzw. Öffnungen der Bodenplatte des Behälters nach unten erstrecken. Der in Rede stehende Behälter bildet somit eine Art Einfülltrichter, da sich über diesen die die daran anschließenden Portionier-Rohre mit Käsebruch/MolkeGemisch befüllen lassen.

Wird jedoch das Käsebruch/Molke-Gemisch in der zuvor beschriebenen Art und Weise verhältnismäßig unkontrolliert in den Behälter bzw. Trichter gefüllt, so kann dies dazu führen, dass sich das Käsebruch/Molke-Gemisch ungleichmäßig in dem Behälter verteilt, was zu einer ungleichmäßigen Beschickung des zumindest einen Portionier-Rohrs führen kann. Insbesondere kann sich das Käsebruch/Molke-Verhältnis des Käsebruch/Molke-Gemischs, das in die einzelnen Rohre gelangt, aufgrund einer ungleichmäßigen Verteilung des Käsebruch/Molke-Gemischs innerhalb des Behälters bzw. Trichters voneinander unterscheiden. Darüber hinaus kann sich der Käsebruch infolge einer unkontrollierten Befüllung des Behälters, bei der dieser auf einmal komplett gefüllt wird, in einzelnen Bereichen des Behälters absetzen, was zu einer unerwünschten Agglomeration und gegebenenfalls sogar zu einem Verschluss einzelner Portionier-Rohre führen kann.

Der Erfindung liegt daher die Aufgabe zugrunde, für eine möglichst gleichmäßige Beschickung des zumindest einen Portionier-Rohrs eines Formatsatzes mit einem Käsebruch/Molke-Gemisch zu sorgen.

Gemäß einem Aspekt wird diese Aufgabe mit einer Vorrichtung mit den Merkmalen des Anspruchs 1 gelöst.

Das Käsebruch/Molke-Gemisch wird erfindungsgemäß also nicht unkontrolliert in den Einfülltrichter dienenden Behälter in der Hoffnung eingefüllt, dass es sich darin möglichst gleichmäßig verteilt; vielmehr ist es gemäß der vorliegenden Erfindung vorgesehen, dass das Käsebruch/Molke-Gemisch bereits gleichmäßig in den Behälter eingebracht wird, indem das Gemisch mittels des in Rede stehenden Strömungsorgans in unterschiedliche Richtungen in den Behälter eingebracht wird, wobei es zusätzlich vorgesehen ist, dass die Stelle, an der das Käsebruch/Molke-Gemisch aus dem Zulaufrohr ausströmt, verändert werden kann, um so für eine möglichst homogene Beschickung des Behälters sowie für eine gleichmäßige Durchmischung des Käsebruch/Molke-Gemischs zu sorgen.

Zwar wäre es grundsätzlich möglich, dass es sich bei dem Zulaufrohr um einen flexiblen Schlauch handelt, an dessen stromabwärtigem Ende als Strömungsorgan eine Art Düse oder dergleichen vorgesehen ist, so dass ein Käsereimitarbeiter das Käsebruch/Molke-Gemisch mittels des Zulaufschlauchs gleichmäßig in dem Trichter verteilen kann, indem er das Strömungsorgan in unterschiedliche Richtungen bewegt. Da jedoch mit der Zeit der Füllstand des Käsebruch/Molke-Gemischs in dem Trichter ansteigt, lassen sich auf diese Art und Weise nur die oberflächennahen Bereiche des Käsebruch/Molke-Gemischs in dem Behälter erreichen, wohingegen es in der Nähe des Behälterbodens zu einer ungleichmäßigen Absetzung des Käsebruchs und somit zu einer unerwünschten Agglomeration kommen kann.

Dementsprechend kann das Zulaufrohr gemäß einer weiteren Ausführungsform einen starren bzw. steifen, geraden, im Wesentlichen vertikal ausgerichteten stromabwärtigen Rohrabschnitt umfassen, an dessen stromabwärtigem Ende das Strömungsorgan vorgesehen ist. Die Länge des vertikal ausgerichteten stromabwärtigen Rohrabschnitts entspricht dabei zumindest der Füllhöhe des Käsebruch/Molke-Gemischs in dem Behälter, damit das Zulaufrohr mit seinem vertikal ausgerichteten stromabwärtigen Rohrabschnitt soweit in das Käsebruch/Molke-Gemisch in dem Behälter eingetaucht werden kann, dass das Strömungsorgan zumindest annähernd den Behälterboden erreicht.

Das Käsebruch/Molke-Gemisch kann somit kontinuierlich der Käsebereitungsvorrichtung zugeführt werden, ohne dass es zu einer ungleichmäßigen Verteilung des Käsebruch/Molke-Gemischs auf die einzelnen Portionier-Rohre des Formatsatzes und zu einer gewünschten Agglomeration innerhalb des Einfülltrichters kommt. Vielmehr kann der Käsebruch in der Molke aufgrund der Tatsache, dass das Käsebruch/Molke-Gemisch kontinuierlich auch bodennahen Bereichen an unterschiedlichen Stellen innerhalb des Einfülltrichters zugeführt werden kann, zuverlässig in Schwebe gehalten werden, wobei durch die Strömung, die durch das Strömungsorgan am stromabwärtigen Ende des Zulaufrohrs bewirkt wird, zu einer zusätzlichen Verwirbelung des Käsebruchs innerhalb der Molke kommt. Es kann somit während des gesamten Beschickungsvorgangs des zumindest einen Portionier-Rohrs für eine homogene und gleichmäßige Verteilung des Käsebruch/Molke-Gemischs innerhalb des Einfülltrichter dienenden Behälters gesorgt werden, wie dies zur Herstellung von Käserohlingen, die jeweils die gleiche Güte aufweisen, wünschenswert ist.

Gemäß einem anderen Aspekt der vorliegenden Erfindung wird die derselben zugrundeliegende Aufgabe ferner mit einem Verfahren mit den Merkmalen des Anspruchs 10 und insbesondere dadurch gelöst, dass der Behälter bzw. Einfülltrichter über zumindest ein Zulaufrohr mit dem Käsebruch/Molke-Gemisch beschickt wird und das Zulaufrohr, insbesondere das stromabwärtige Ende desselben, während der Beschickung des Behälters mit dem Käsebruch/Molke-Gemisch innerhalb und/oder oberhalb des Behälters in unterschiedlichen Richtungen bewegt wird.

Im Folgenden wird nun auf bevorzugte Ausführungsformen der Erfindung eingegangen, wobei sich weitere Ausführungsformen auch aus den abhängigen Ansprüchen, der Figurenbeschreibung sowie den Zeichnungen selbst ergeben können.

So kann es gemäß einer Ausführungsform vorgesehen sein, dass die Position des Strömungsorgans in allen drei Raumrichtungen verändert werden kann. Insbesondere kann es dabei vorgesehen sein, dass sich zumindest die Position des Strömungsorgans in vertikaler Richtung zur Einstellung des Abstands zwischen dem Behälterboden und dem Strömungsorgan verändern lässt. Hierbei sollte der maximal mögliche vertikale Hub des Zulaufrohrs größer sein als die Behälterhöhe, um das Strömungsorgan zum einen aus dem Behälter entnehmen und zum anderen möglichst nah an den Behälterboden führen zu können.

Obwohl sich aufgrund der Tatsache, dass die Position des Strömungsorgans in allen drei Raumrichtungen verändert werden kann, jede Stelle innerhalb des Behälters mit dem Strömungsorgan erreichen lässt, kann es zusätzlich vorgesehen sein, das sich das Strömungsorgan um eine vertikale Achse drehen und/oder auf einer Kreisbahn bewegen lässt, indem beispielsweise das Zulaufrohr um eine vertikal stehende Achse verschwenkt wird. Hierdurch ließe sich insbesondere während des Befüllvorgangs des Behälters mit Käsebruch/Molke-Gemisch die Position des Strömungsorgans verhältnismäßig einfach von Hand verändern, wenn dies von einem Käsereimitarbeiter als notwendig erachtet wird.

Gemäß einer weiteren Ausführungsform kann es vorgesehen sein, dass das Strömungsorgan als eine Düse ausgebildet ist. Die Düse kann dabei gemäß einer weiteren Ausführungsform als in Ventil, vorzugsweise als ein Ventil mit veränderlichem Durchflussquerschnitt ausgebildet sein, wobei es insbesondere vorgesehen sein kann, dass sich je nach Stellung des Ventilverschlussteils der Durchflussquerschnitt der Düse in Strömungsrichtung aufweitet oder verjüngt.

Beispielsweise kann das Strömungsorgan als ein Tellerventil mit einem Ventilteller als Ventilverschlussteil und einem Ventilsitz ausgebildet sein, der von dem freien Ende des Zulaufrohrs und insbesondere von dem freien Ende des vertikal ausgerichteten stromabwärtigen Rohrabschnitts des Zulaufrohrs gebildet wird. Zwischen dem Ventilteller und dem Ventilsitz wird somit ein Ringspalt gebildet, durch den das Käsebruch/Molke-Gemisch aus dem Zulaufrohr austreten kann, wodurch es zu einer ringförmigen Verteilung des durch den in Rede stehenden Ringspalt austretenden Käsebruch/Molke-Gemischs innerhalb des Behälters kommt.

Der Druchflussquerschnitt des Tellerventils kann dabei verändert werden, indem der Abstand zwischen dem Ventilteller und dem Ventilsitz und damit die Größe des Ringspalts verändert wird. Je kleiner dabei die Größe des Ringspalts ist, umso größer ist die Geschwindigkeit des aus dem Tellerventil austretenden Käsebruch/Molke-Gemischs. Durch eine derartige Reduzierung des Durchflussquerschnitts des Tellerventils kann somit einer unerwünschten Agglomeration des Käsebruch/Molke-Gemischs innerhalb des Behälters zuvorgekommen werden, da durch das aus dem Strömungsorgan mit relativ hoher Geschwindigkeit austretende Käsebruch/Molke-Gemisch der Käsebruch in der Molke aufgewirbelt und somit in Schwebe gehalten werden kann. Da sich der Durchflussquerschnitt mittels des in Rede stehenden Ventils folglich auch auf null reduzieren und somit das Ventil absperren lässt, bedarf es keines weiteren Absperrorgans in dem Zulaufrohr, mit dem die Strömung des Käsebruch/Molke-Gemischs gedrosselt bzw. unterbrochen werden kann.

Gemäß einer weiteren Ausführungsform kann sich der Ventilschaft des Tellerventils, der den Ventilteller trägt, zum Teil innerhalb des Zulaufrohrs erstrecken, wobei das Zulaufrohr eine gegenüber dem Ventilschaft abgedichtete Öffnung aufweist, durch die sich der Ventilschaft aus dem Zulaufrohr heraus nach außen erstreckt. Der Ventilschaft ist somit frei zugänglich, so dass sich der Durchflussquerschnitt des Ventils bei Bedarf auch während des Befüllvorgangs des Behälters mit Käsebruch/Molke-Gemisch verändern lässt.

Zwar könnten innerhalb des Zulaufrohrs und insbesondere innerhalb des vertikal ausgerichtete stromabwärtigen Rohrabschnitts des Zulaufrohrs in Längsrichtung zueinander beabstandete Führungsvorsprünge vorgesehen sein, durch die der Ventilschaft geführt wird; da hierdurch jedoch der Durchflussquerschnitt des Zulaufrohrs in unerwünschter Weise eingeengt werden würde, kann es gemäß einer weiteren Ausführungsform vorgesehen sein, dass das Zulaufrohr an der Öffnung, durch die sich der Ventilschaft aus dem Zulaufrohr nach außen erstreckt, eine Ventilführung aufweist, die den Ventilschaft rein translatorisch führt. Bei der in Rede stehenden Ventilführung kann es sich beispielsweise um eine Art Hülse handeln, die an das Zulaufrohr die in Rede stehende Öffnung umgebend angeschweißt ist und deren Innendurchmesser im Wesentlichen dem Durchmesser des Ventilschafts entspricht.

Um den Ventilschaft aus dem Zulaufrohr nach außen führen zu können, kann es gemäß einer weiteren Ausführungsform vorgesehen sein, dass der gerade, im Wesentlichen vertikal ausgerichtete stromabwärtige Rohrabschnitt ein Abschnitt des Zulaufrohrs ist, der gegenüber dem restlichen Abschnitt des Zulaufrohrs abgewinkelt oder abgekröpft ist. Hierdurch ist es möglich, den Ventilschaft aus dem Zulaufrohr herauszuführen, wozu an der entsprechenden Stelle, an der der Ventilschaft auf die Wandung des Zulaufrohrs trifft, die bereits zuvor erwähnte Öffnung vorzusehen ist, durch die sich der Ventilschaft aus dem Zulaufrohr nach außen erstrecken kann.

Gemäß noch einer weiteren Ausführungsform kann es vorgesehen sein, dass die erfindungsgemäße Vorrichtung ferner einen antriebswirksam mit dem Zulaufrohr gekoppelten Aktuator umfasst, mittels dessen die Position des Strömungsorgans innerhalb des Behälters entsprechend einem vorgegebenen oder vorgebbaren Bewegungsmuster verändert werden kann. Das Zulaufrohr und insbesondere das am stromabwärts gelegenen Ende des Zulaufrohrs befindliche Strömungsorgan kann somit während des gesamten Beschickungsvorgangs des Behälters in demselben und insbesondere innerhalb des bereits eingefüllten Käsebruch/Molke-Gemischs bewegt werden, wodurch nicht nur eine bewusst herbeigeführte Verwirbelung des Käsebruchs in der Molke, sondern insbesondere auch eine gleichmäßige Bruchverteilung während des gesamten Abfüllvorgangs sichergestellt werden kann.

Im Folgenden wird nun unter Bezugnahme auf die Figuren eine Ausführungsform einer erfindungsgemäßen Vorrichtung zum Befüllen eines mehrere Portionier-Rohre umfassenden Formatsatzes mit einem Käsebruch/Molke-Gemisch exemplarisch erläutert, in denen:
- Fig. 1: eine schematische Querschnittsdarstellung einer Käsebereitungsvorrichtung zum Abfüllen und Dosieren eines Käsebruch/Molke-Gemischs zeigt;
- Fig. 2: eine schematische Querschnittsdarstellung einer erfindungsgemäßen Vorrichtung zum Befüllen eines mehrere Portionier-Rohre umfassenden Formatsatzes mit einem Käsebruch/Molke-Gemisch zeigt; und
- Fig. 3: eine Draufsicht auf die Vorrichtung der Fig. 2 mit Blick in das Behälterinnere zeigt.

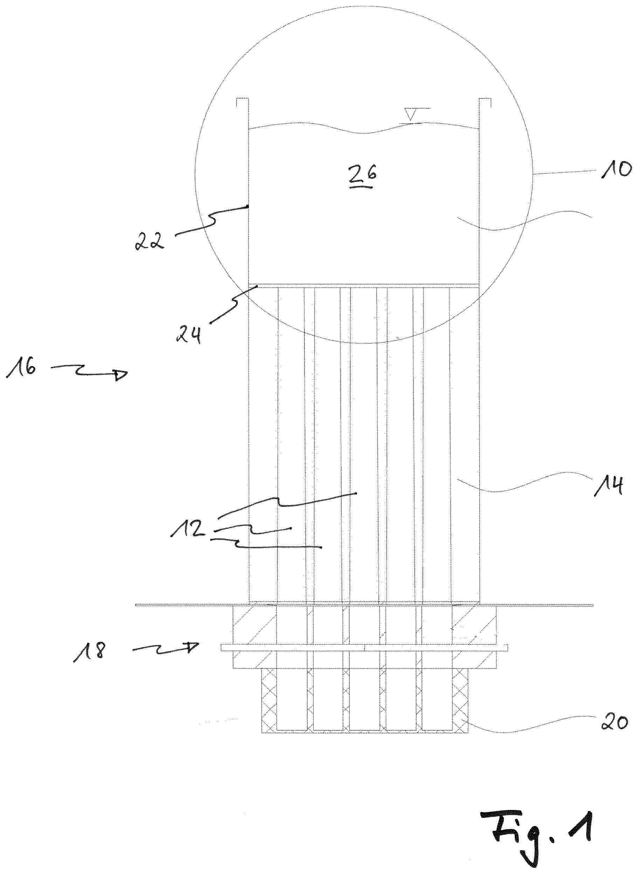

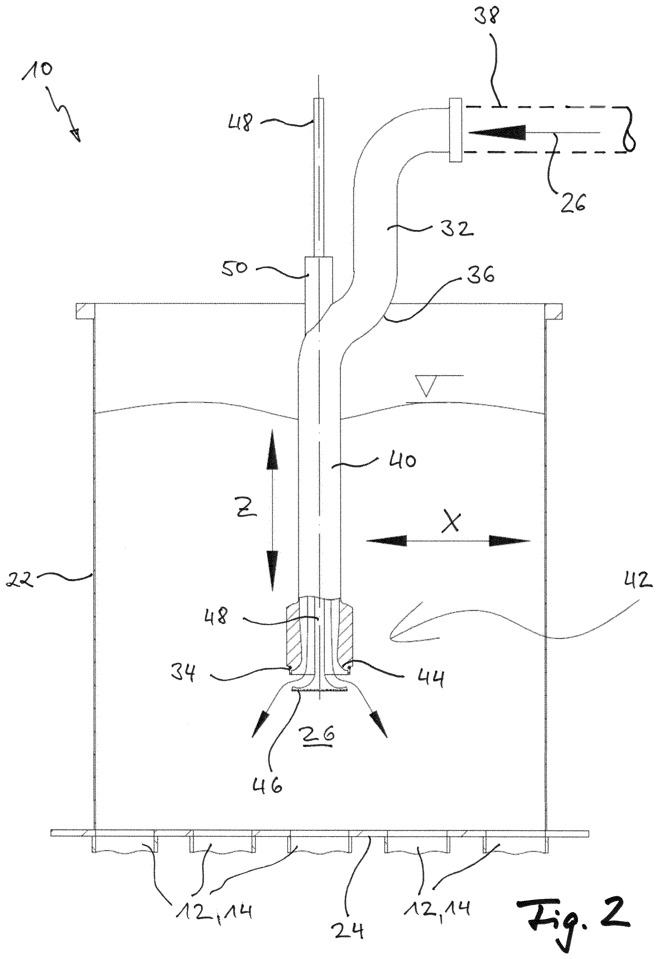

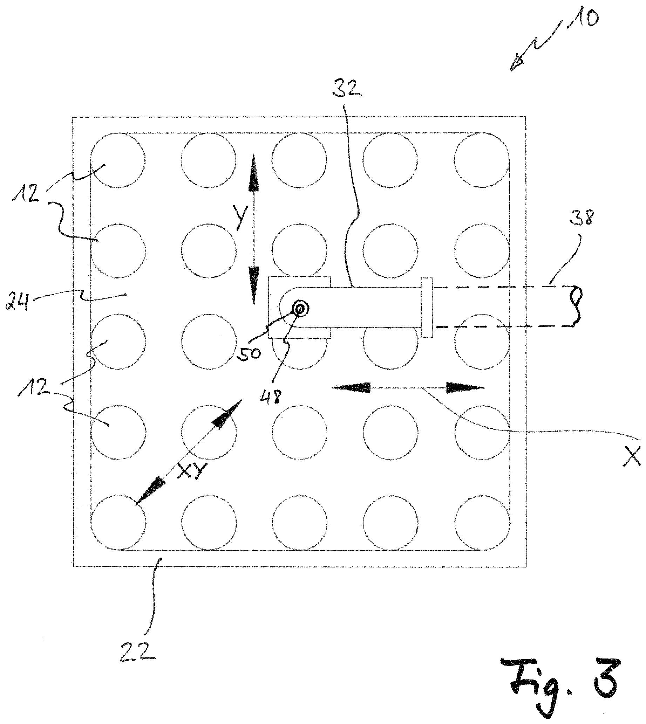

Bevor nachfolgend unter Bezugnahme auf die Fig. 2 und 3 die erfindungsgemäße Vorrichtung 10 zum Befüllen eines mehrere Portionier-Rohre 12 umfassenden Formatsatzes 14 mit einem Käsebruch/Molke-Gemisch erläutert wird, wird zunächst unter Bezugnahme auf die Fig. 1 eine Käsebereitungsvorrichtung 16 mit solch einem Formatsatz 14 erläutert, bei dem die erfindungsgemäße Vorrichtung 10 Verwendung finden kann. Zwar verfügt die hier dargestellte Vorrichtung über mehrere Portionier-Rohre 12; hiervon abweichend eignet sich die erfindungsgemäße Vorrichtung jedoch auch zur Beschickung eines nur ein einziges Portionier-Rohr umfassenden Formatsatzes mit einem Käsebruch/Molke-Gemisch.

Die in der Fig. 1 dargestellte Käsebereitungsvorrichtung 16 umfasst mehrere vertikal ausgerichtete gerade Portionier-Rohre 12, die parallel zueinander ausgerichtet sind und in einem regelmäßigen Raster angeordnet sind (siehe hierzu auch die Fig. 3). Die Portionier-Rohre 12 dienen zur Aufnahme eines Käsebruch/Molke-Gemischs 26, das denselben über einen als Einfülltrichter dienenden Behälter 22 zugeführt wird, der sich oberhalb und stromaufwärts der Portionier-Rohre 12 befindet. Der Behälterboden 24 des Behälters 22 wird dabei durch ein Lochblech gebildet, wobei die einzelnen Öffnungen bzw. Löcher dieses Lochblechs 24 mit dem oberen Ende der einzelnen Portionier-Rohre 12 ausgerichtet sind, die an der Unterseite des Behälterbodens 24 die jeweilige Löcher umgebend angeschweißt und/oder in dieselben eingesteckt sind. Auch können die einzelnen Portionier-Rohre 12 beispielweise auf kurze Rohrhülsen aufgesteckt, eingesteckt, eingeschraubt oder aufgeschraubt werden, die ihrerseits an der Unterseite des Behälterbodens 24 die jeweilige Löcher umgebend befestigt, beispielsweise angeschweißt, sind. Der Behälter 22 dient somit als Einfülltrichter, über den die einzelnen Portionier-Rohre 12 des Formatsatzes 14 mit Käsebruch/Molke-Gemisch 26 beschickt werden können. Entgegen der hier dargestellten Ausführungsform, bei der der Behälterboden 24 eben ausgebildet ist, kann der Behälterboden 24 auch trichterförmig ausgebildet sein.

Stromabwärts bzw. unterhalb des Formatsatzes 14 ist eine Dosiereinrichtung 18 vorgesehen, welche dazu dient, von dem sich in den Portionier-Rohren 12 ausbildenden Käsebruch-Säulen einzelne Portionen abtrennen und in eine unterhalb bzw. stromabwärts der Dosiereinrichtung 18 angeordnete Käseform 20 zur weiteren Reifung abfüllen zu können. Die konkrete Ausgestaltung der Dosiereinrichtung 18 ist für die vorliegende Erfindung von nur untergeordneter Bedeutung, weshalb hierauf nachfolgend nicht genauer eingegangen werden muss. Grundsätzlich kann die Dosiereinrichtung 18 jedoch über mehrere in Strömungsrichtung voneinander beabstandete Schieber verfügen, so dass sich durch wechselseitiges Öffnen bzw. Schließen dieser Schieber eine definierte Menge des Käsebruch/Molke-Gemischs in die Käseform 20 abfüllen lässt.

Wird der Behälter 22 auf einmal komplett gefüllt und befindet sich das in den Behälter 22 eingefüllte Käsebruch/Molke-Gemisch 26 für längere Zeit in dem Behälter 22, so kann sich der Käsebruch in der Molke absetzen, was zu einer unerwünschten Agglomeration innerhalb des Behälters 22 führen kann. Darüber hinaus kann sich der Käsebruch ungleichmäßig in dem Behälter 22 verteilen, was in unerwünschter Weise dazu führen kann, dass sich das Käsebruch/Molke-Verhältnis des Käsebruch/Molke-Gemischs 26, das in die einzelnen Portionier-Rohre 12 gelangt, voneinander unterscheidet.

Zwar ließe sich eine Homogenisierung des Käsebruch/Molke-Gemischs 26 in dem Behälter 22 beispielweise mittels eines mechanischen Rührwerks erzielen; durch ein derartiges Rührwerk wird jedoch in unerwünschter Weise die innere Struktur des Käsebruchs zerstört, weshalb von der Verwendung derartiger Rührwerke abzuraten ist.

Erfindungsgemäß wird daher erstmals vorgeschlagen, das Käsebruch/Molke-Gemisch mittels eines Zulaufrohrs 32 in den Behälter 22 einzubringen (siehe hierzu die Fig. 2 und 3), wobei das Zulaufrohr 32 und insbesondere das stromabwärtige Ende 34 desselben während der Beschickung des Behälters 32 mit dem Käsebruch/Molke-Gemisch 26 innerhalb und/oder oberhalb des Behälters 22 in unterschiedlichen Richtungen bewegt wird, wie dies in den Fig. 2 und 3 durch die Doppelpfeile X, Y, Z angedeutet ist, durch die veranschaulicht wird, dass sich das Zulaufrohr 32 innerhalb des Behälters 22 in allen drei Raumrichtungen X, Y, Z frei bewegen lässt. Auch eine Bewegungsüberlagerung der einzelnen Bewegungsrichtungen ist möglich, womit sich beliebige Bewegungsmuster des Zulaufrohrs 32 und insbesondere des stromabwärtigen Endes 34 desselben innerhalb des Behälters 22 darstellen lassen.

Wie der Fig. 2 entnommen werden kann, weist das Zulaufrohr 32 etwa in seiner Mitte eine Abkröpfung 36 in Form zweier gegensinnig gekrümmter Krümmungsabschnitte auf. Auf die Funktion und Vorteilhaftigkeit dieser Abkröpfung 36 wird nachfolgend noch genauer eingegangen.

An seinem stromaufwärtigen Ende 34 kann das Zulaufrohr 32 an einem hier nur schematisch angedeuteten horizontal ausgerichteten Rohrabschnitt 38 angeschlossen sein, welcher mit einem hier nicht dargestellten Aktuator antriebswirksam gekoppelt ist, durch dessen Betätigung sich die Position des Zulaufrohrs 32 innerhalb des Behälters 22 entsprechend einem vorgegebenen oder vorgebbaren Bewegungsmuster bewegen lässt.

Wie der Fig. 2 ferner entnommen werden kann, ist an dem stromabwärtigen Ende 34 des Zulaufrohrs 32 und insbesondere an dem geraden, vertikal ausgerichteten Rohrabschnitt 40, der sich stromabwärts der Abkröpfung 36 befindet, ein Strömungsorgan in Form eines Tellerventils 42 vorgesehen, dessen Ventilsitz 44 von dem freien Ende 34 des Zulaufrohrs 32 bzw. des stromabwärtigen Rohrabschnitts 40 des Zulaufrohrs 32 gebildet wird. Das Tellerventil 32 umfasst ferner einen Ventilteller 46, dessen Abstand gegenüber dem freien Ende des Zulaufrohrs 32 zur Veränderung des Durchflussquerschnitts des Tellerventils 42 eingestellt werden kann. Mit anderen Worten kann die Größe des Ringspalts zwischen dem Ventilteller 46 und dem Ventilsitz 44 verändert werden, so dass mit zunehmender Reduzierung der Größe des Ringspalts die Austrittsgeschwindigkeit des Käsebruch/Molke-Gemischs aus dem Tellerventil 42 zunimmt, wie dies wünschenswert sein kann, um das bereits in dem Behälter 22 befindliche Käsebruch/Molke-Gemisch 26 verwirbeln und somit den Käsebruch in der Molke in Schwebe halten zu können.

Das Tellerventil 42 weist ferner einen Ventilschaft 48 auf, der einstückig mit dem Ventilteller 46 ausgebildet sein kann und der sich innerhalb des vertikal ausgerichteten Rohrabschnitts 40 stromabwärts der Abkröpfung 36 erstreckt. Das Käsebruch/Molke-Gemisch strömt somit in dem Ringspalt, der sich zwischen dem Ventilschaft 48 und der Wandung des stromabwärtigen Rohrabschnitts 40 ergibt.

Wie der Fig. 2 ferner entnommen werden kann, erstreckt sich der Ventilschaft 48 aus dem Zulaufrohr 32 nach außen, so dass das Tellerventil 42 während der Beschickung des Behälters 22 händisch manipuliert werden kann. Genauer erstreckt sich der Ventilschaft 38 im Bereich des stromabwärtigen Krümmungsabschnitts der Abkröpfung 36 aus dem Inneren des Zulaufrohrs 32 nach außen, wozu das Zulaufrohr 32 eine gegenüber dem Ventilschaft 48 abgedichtete Öffnung aufweist, durch die sich der Ventilschaft 48 nach außen erstreckt. Zur Führung des Ventilschafts 48 ist an dem Zulaufrohr 32 eine die in Rede stehende Öffnung umgebende Hülse 50 angeschweißt, deren Innendurchmesser im Wesentlichen dem Außendurchmesser des Ventilschafts 48 entspricht, so dass dieser rein translatorisch geführt ist und sich somit nicht schrägstellen kann.

Es lässt sich somit nicht nur die Position des Zulaufrohrs 32 und insbesondere die Position des Tellerventils 42 am stromabwärtigen Ende 34 des Zulaufrohrs 32 während des Befüllvorgangs des Behälters 22 verändern, um so für ein möglichst homogenes Käsebruch/Molke-Gemisch 26 innerhalb des Behälters 22 zu sorgen; vielmehr kann durch die Düsenwirkung des Tellerventils 42, über das das Käsebruch/Molke-Gemisch 26 in radialer Richtung mit einer ringförmigen Verteilung in den Behälter 22 abgegeben wird, eine turbulente Strömung innerhalb des Behälters 22 erzeugt werden, die in der gewünschten Weise zu einer Verwirbelung des Käsebruchs in der Molke und somit zu einer homogenen Käsebruchverteilung innerhalb des Behälters 22 führt.

### Bezugszeichenliste

- 10: Vorrichtung
- 12: Portionier-Rohr
- 14: Formatsatz
- 16: Käsebereitungsvorrichtung
- 18: Dosiereinrichtung
- 20: Käseform
- 22: Behälter
- 24: Behälterboden/Lochblech
- 26: Käsebruch/Molke-Gemisch
- 32: Zulaufrohr
- 34: stromabwärtiges Ende von 32
- 36: Abkröpfung
- 38: horizontaler Rohrabschnitt
- 40: stromabwärtiger Rohrabschnitt
- 42: Strömungsorgan/Tellerventil
- 44: Ventilsitz
- 46: Ventilteller
- 48: Ventilschaft
- 50: Ventilführung

- X, Y, Z: Bewegungsrichtungen

## Patentansprüche

1. Vorrichtung (10) zum Befüllen eines ein oder mehrere Portionier-Rohre (12) umfassenden Formatsatzes (14) mit einem Käsebruch/Molke-Gemisch (26), umfassend:
- einen Behälter (22) zur Aufnahme des Käsebruch/Molke-Gemischs (26) mit einem Behälterboden (24), der ein oder mehrere Öffnungen zur Abgabe des Käsebruch/Molke-Gemischs (26) in jeweilige Portionier-Rohre (12) aufweist; und
- zumindest ein Zulaufrohr (32) zur Beschickung des Behälters (22) mit dem Käsebruch/Molke-Gemisch (26);
wobei an dem stromabwärtigen Ende des Zulaufrohrs (32) ein Strömungsorgan (42) vorgesehen ist, das das in dem Zulaufrohr (32) strömende Käsebruch/Molke-Gemischs (26) in mehrere Richtungen umlenkt und dessen Position relativ zu dem Behälter (22) veränderlich ist;
**dadurch gekennzeichnet , dass**
die Position des Strömungsorgans (42) in zumindest zwei Raumrichtungen (X, Y, Z) während der Beschickung des Behälters (22) mit dem Käsebruch/Molke-Gemisch (26) veränderbar ist.

2. Vorrichtung nach Anspruch 1,
wobei die Position des Strömungsorgans (42) in allen drei Raumrichtungen (X, Y, Z) veränderbar ist, wobei es insbesondere vorgesehen ist, dass die Position des Strömungsorgans (42) in vertikaler Richtung (Z) zur Einstellung des Abstands zwischen dem Behälterboden (24) und dem Strömungsorgan (42) veränderbar ist.

3. Vorrichtung nach Anspruch 1 oder 2,
wobei das Strömungsorgan (42) als eine Düse ausgebildet ist.

4. Vorrichtung nach zumindest einem der vorstehenden Ansprüche,
wobei das Strömungsorgan (42) als ein Ventil mit veränderlichem Durchflussquerschnitt ausgebildet ist.

5. Vorrichtung nach zumindest einem der vorstehenden Ansprüche,
wobei das Strömungsorgan (42) als ein Tellerventil (42) mit einem Ventilteller (46) und einem Ventilsitz (44) ausgebildet ist, der von dem freien Ende (34) des Zulaufrohrs (32) gebildet wird, wobei es insbesondere vorgesehen ist, dass die Größe des Ringspalts zwischen dem Ventilteller (46) und dem Ventilsitz (44) einstellbar ist.

6. Vorrichtung nach Anspruch 5,
wobei das Tellerventil (42) einen den Ventilteller (46) tragenden Ventilschaft (48) aufweist, der sich zum Teil innerhalb des Zulaufrohrs (32) erstreckt, wobei das Zulaufrohr (32) eine Öffnung aufweist, durch die sich der Ventilschaft (48) aus dem Zulaufrohr (32) nach außen erstreckt, wobei es insbesondere vorgesehen ist, dass das Zulaufrohr (32) an der Öffnung eine Ventilführung (50) aufweist, die den Ventilschaft (48) translatorisch führt.

7. Vorrichtung nach zumindest einem der vorstehenden Ansprüche,
wobei das Zulaufrohr (32) einen geraden, im Wesentlichen vertikal ausgerichteten stromabwärtigen Rohrabschnitt (40) umfasst, an dessen stromabwärtigen Ende das Strömungsorgan (42) vorgesehen ist.

8. Vorrichtung nach zumindest einem der vorstehenden Ansprüche,
wobei der stromabwärtige Rohrabschnitt (40) ein Abschnitt des Zulaufrohrs (32) ist, der gegenüber dem restlichen Abschnitt des Zulaufrohrs (32) abgewinkelt oder abgekröpft ist.

9. Vorrichtung nach zumindest einem der vorstehenden Ansprüche,
wobei die Vorrichtung (10) ferner einen antriebswirksam mit dem Zulaufrohr (32) gekoppelten Aktuator zur Veränderung der Position des Strömungsorgans (42) innerhalb des Behälters (22) entsprechend einem vorgegebenen oder vorgebbaren Bewegungsmuster umfasst.

10. Verfahren zum Befüllen eines ein oder mehrere Portionier-Rohre (12) umfassenden Formatsatzes (14) mit einem Käsebruch/Molke-Gemisch (26) aus einem Behälter (22), der einen Behälterboden (24) mit einer oder mehreren Öffnungen zur Abgabe des Käsebruch/Molke-Gemischs (26) in jeweilige Portionier-Rohre (12) aufweist, wobei der Behälter (22) über zumindest ein Zulaufrohr (32) mit dem Käsebruch/Molke-Gemisch (26) beschickt wird und das stromabwärtige Ende des Zulaufrohrs (32) während der Beschickung des Behälters (22) mit dem Käsebruch/Molke-Gemisch (26) innerhalb und/oder oberhalb des Behälters (22) in zumindest zwei Raumrichtungen (X, Y, Z) bewegt wird.

## Claims

1. An apparatus (10) for filling a format set (14) comprising one or more portioning tubes (12) with a curd/whey mixture (26), said apparatus (10) comprising:
- a container (22) for receiving the curd/whey mixture (26) comprising a container base (24) which has one or more openings for dispensing the curd/whey mixture (26) into respective portioning tubes (12); and
- at least one feed tube (32) for loading the container (22) with the curd/whey mixture (26);
wherein a flow member (42) is provided at the downstream end of the feed tube (32) and deflects the curd/whey mixture (26) flowing in the feed tube (32) in several directions, the position of said flow member (42) being variable relative to the container (22),
**characterized in that**
the position of the flow member (42) can be varied in at least two spatial directions (X, Y, Z) during the loading of the container (22) with the curd/whey mixture (26).

2. An apparatus according to claim 1,
wherein the position of the flow member (42) is variable in all three spatial directions (X, Y, Z), wherein it is in particular provided that the position of the flow member (42) is variable in the vertical direction (Z) for setting the spacing between the container base (24) and the flow member (42).

3. An apparatus according to claim 1 or 2,
wherein the flow member (42) is configured as a nozzle.

4. An apparatus according to at least one of the preceding claims,
wherein the flow member (42) is configured as a valve having a variable flow cross-section.

5. An apparatus according to at least one of the preceding claims,
wherein the flow member (42) is configured as a poppet valve (42) having a valve disk (46) and a valve seat (44) which is formed by the free end (34) of the feed tube (32), wherein it is in particular provided that the size of the annular gap between the valve disk (46) and the valve seat (44) is settable.

6. An apparatus according to claim 5,
wherein the poppet valve (42) has a valve shaft (48) supporting the valve disk (46) and extending partly within the feed tube (32), wherein the feed tube (32) has an opening through which the valve shaft (48) extends outwardly from the feed tube (32), wherein it is in particular provided that the feed tube (32) has, at the opening, a valve guide (50) which guides the valve shaft (48) in a translatory manner.

7. An apparatus according to at least one of the preceding claims,
wherein the feed tube (32) comprises a straight, substantially vertically oriented downstream tube section (40) at whose downstream end the flow member (42) is provided.

8. An apparatus according to at least one of the preceding claims,
wherein the downstream tube section (40) is a section of the feed tube (32) that is angled or cranked with respect to the remaining section of the feed tube (32).

9. An apparatus according to at least one of the preceding claims,
wherein the apparatus (10) further comprises an actuator drive-effectively coupled to the feed tube (32) for varying the position of the flow member (42) within the container (22) according to a predefined or predefinable movement pattern.

10. A method for filling a format set (14) comprising one or more portioning tubes (12) with a curd/whey mixture (26) from a container (22) which has a container base (24) having one or more openings for dispensing the curd/whey mixture (26) into respective portioning tubes (12), wherein the container (22) is loaded with the curd/whey mixture (26) via at least one feed tube (32) and the downstream end of the feed tube (32) is moved within and/or above the container (22) in at least two spatial directions (X, Y, Z) during the loading of the container (22) with the curd/whey mixture (26).

## Revendications

1. Dispositif (10) de remplissage d'un lot de formats (14), comprenant un ou plusieurs tubes de formation de portions (12), avec un mélange caillé/petit-lait (26), comportant :
- un récipient (22) de réception du mélange caillé/petit-lait (26), comprenant un fond de récipient (24) qui présente une ou plusieurs ouvertures de distribution du mélange caillé/petit-lait (26) dans des tubes de formation de portions (12) respectifs ; et
- au moins un tube d'amenée (32) pour alimenter le récipient (22) en mélange caillé/petit-lait (26) ;
un organe d'écoulement (42) étant prévu à l'extrémité aval du tube d'amenée (32), qui fait dévier le mélange caillé/petit-lait (26), s'écoulant dans le tube d'amenée (32), dans plusieurs directions, et dont la position par rapport au récipient (22) est variable,
**caractérisé en ce que**
la position de l'organe d'écoulement (42) est variable dans au moins deux directions de l'espace (X, Y, Z) pendant l'alimentation du récipient (22) en mélange caillé/petit-lait (26).

2. Dispositif selon la revendication 1,
dans lequel la position de l'organe d'écoulement (42) est variable dans toutes les trois directions de l'espace (X, Y, Z), et
il est en particulier prévu que la position de l'organe d'écoulement (42) soit variable dans la direction verticale (Z) pour régler la distance entre le fond de récipient (24) et l'organe d'écoulement (42).

3. Dispositif selon la revendication 1 ou 2,
dans lequel l'organe d'écoulement (42) est conçu comme une buse.

4. Dispositif selon l'une au moins des revendications précédentes,
dans lequel l'organe d'écoulement (42) est conçu comme une vanne à section transversale de passage variable.

5. Dispositif selon l'une au moins des revendications précédentes,
dans lequel l'organe d'écoulement (42) est conçu comme une soupape à champignon (42) comportant une tête de soupape (46) et un siège de soupape (44) formé par l'extrémité libre (34) du tube d'amenée (32), et
il est en particulier prévu que la taille de l'interstice annulaire entre la tête de soupape (46) et le siège de soupape (44) soit réglable.

6. Dispositif selon la revendication 5,
dans lequel la soupape à champignon (42) comporte une tige de soupape (48) portant la tête de soupape (46) et s'étendant en partie à l'intérieur du tube d'amenée (32), le tube d'amenée (32) présentant une ouverture à travers laquelle la tige de soupape (48) s'étend vers l'extérieur du tube d'amenée (32), et
il est en particulier prévu que le tube d'amenée (32) comporte, au niveau de l'ouverture, un guide de soupape (50) qui guide la tige de soupape (48) en translation.

7. Dispositif selon l'une au moins des revendications précédentes,
dans lequel le tube d'amenée (32) comprend une portion de tube aval (40) rectiligne, orientée sensiblement verticalement, à l'extrémité aval de laquelle est prévu l'organe d'écoulement (42).

8. Dispositif selon l'une au moins des revendications précédentes,
dans lequel la portion de tube aval (40) est une portion du tube d'amenée (32) qui est pliée ou coudée par rapport au reste du tube d'amenée (32).

9. Dispositif selon l'une au moins des revendications précédentes,
dans lequel le dispositif (10) comprend en outre un actionneur couplé en entraînement au tube d'amenée (32) pour modifier la position de l'organe d'écoulement (42) à l'intérieur du récipient (22) selon un modèle de mouvement prédéfini ou prédéfinissable.

10. Procédé de remplissage d'un lot de formats (14), comprenant un ou plusieurs tubes de formation de portions (12), avec un mélange caillé/petit-lait (26) à partir d'un récipient (22) qui comprend un fond de récipient (24) présentant une ou plusieurs ouvertures de distribution du mélange caillé/petit-lait (26) dans des tubes de formation de portions (12) respectifs, le récipient (22) étant alimenté en mélange caillé/petit-lait (26) par l'intermédiaire d'au moins un tube d'amenée (32), et l'extrémité aval du tube d'amenée (32) est déplacée dans au moins deux directions de l'espace (X, Y, Z) à l'intérieur et/ou au-dessus du récipient (22) pendant l'alimentation du récipient (22) en mélange caillé/petit-lait (26).
